# EUROPEAN PATENT APPLICATION

(11) **EP 3 069 968 A1**
(43) Date of publication of application: **21.09.2016**
(21) Application number: 15159265.6
(22) Date of filing: 16.03.2015
(51) Int. Cl.: B62H 5/14

(54) **Electric through-the-wheel bike lock**

(71) Applicant: Kipando BVBA, 3500 Hasselt (BE)
(72) Inventor: Verbist, Tom, 2800 Mechelen (BE); Ruytjens, Tim, 2640 Mortsel (BE); Hermans, Bart, 1860 Meise (BE); Middernacht, Frederik, 4000 Plovdiv (BG); Deleus, Willem, 3190 Boortmeerbeek (BE)
(74) Representative: Plas, Axel Ivo Michel

(57) **Abstract**

Electric wheel lock for a bike comprising a body attachable to a bike frame comprising a first and second arm comprising locking means (350). The lock comprising a bolt (330) insertable through this first arm into locking means (350) of the second arm. Locking means comprises motor means (351, 352, 353) rotatable along a rotation axis (356) perpendicular to the bolt between a first opened and closed position. Rotation means comprises an eccentric rotating end portion (366) providing a linear movement (357) perpendicular to the rotation axis. Motor means comprises a latch (359) moveable by this movement between a second closed and opened position and pre-tensioned in this second closed position. In this closed position the latch is inserted in a groove of the bolt. The latch further comprises a groove (355) such that it is movable to the second opened position upon insertion of the bolt and movable back into the second closed position while the motor means is in the first closed position.

## Description

### Field of the Invention

The present invention generally relates to electric locks for bikes. In particular, it relates to electric through-the-wheel locks that are attached to the bike frame. When installed, arms of the lock extend over the wheel rim. When closing the bike, a pin is inserted through one of the arms into the other arm thereby obstructing the spokes and thus preventing the wheel from turning.

In an electric lock, the pin is released or opened by electric means and, thus, does not require the use of a physical key together with an action of a user. The command for opening or closing the lock may thereby be issued remotely or from by an action on the lock itself.

A bike may further correspond to a bicycle, electric bicycle, motorcycle or motorbike.

### Background of the Invention

Electric locks for bikes are appearing on the market as a replacement for mechanical locks. The main application for such electric locks is in bike fleet management. Before, a main hassle in bike fleet management was the distribution, collection and management of the keys and the dependency on expensive bike sharing infrastructure. With electric locks, a digital code or a digital key is used to unlock the bike. Such a code may be transferred wirelessly to the electric lock or by a data carrier. Compared to their mechanical counterparts, digital keys are much easier to manage. Electric locks may for example be reprogrammed to accept a new digital key when a digital key is compromised or even when a new user is assigned to a bike.

Besides operating electrically, electric locks should also be safe and applicable to a wide range of bike types. Furthermore, as the locks are typically battery operated, they should be energy efficient to avoid replacing or recharging the battery as much as possible.

The publication US2008018440A1 discloses a fixed through-the-wheel lock for a bicycle. A locking bar is attached to the lock by a cable. Upon closing the lock, the cable is put around a fixed object and the locking bar is inserted into the locking mechanism of the lock. By the use of the cable and locking bar, the bicycle is not only locked by obstructing the spokes but also by fixing the bicycle to a fixed object. The locking mechanism inside the lock uses a cam which is insertable into a groove at the end of the bar upon insertion in the lock. For providing the up- and downward movement of the cam, a driving means is provided.

A first problem with this lock is that the driving means provides a linear movement which is typically provided by applying a magnetic force, for example by the use of a solenoid. Such locks can however be opened by moving a strong magnet along the lock, rendering the bike prone to theft. Furthermore, solenoids are also more sensitive to vibrations and shocks by which the lock can open unexpectedly.

A second problem is that the locking mechanism sits next to the locking bar making the arm of the lock big and bulky. This poses a problem when fitting the lock on certain types of bikes as not all bikes foresee so much space for installing a through-the-wheel lock.

### Summary of the Invention

It is an object of the present invention to solve the above identified problems by providing a bike lock which is safe, can be fitted on a wide variety of bikes and can be manufactured economically.

This object is achieved by an electric wheel lock for a bike comprising a body attachable to a bike frame. The body comprises a first and second arm extending over both sides of a wheel rim when installed on the bike frame. The second arm further comprises locking means. The lock also comprises a bolt insertable through the first arm into the locking means in a locked position and the bolt comprises a groove. The locking means further comprises:
- Motor means rotatable along a rotation axis between a first opened position and a first closed position. The rotation axis is perpendicular to the bolt when in the locked position. The rotation means comprises an eccentric rotating end portion providing a linear movement perpendicular to this rotation axis.
- A latch moveable by this linear movement between a second closed position and a second opened position and pre-tensioned in this second closed position. In the closed position the latch is inserted in the groove when in the locked position. The latch further comprises a groove such that it is movable to this second opened position upon insertion of the bolt and movable back into the second closed position while the motor means is in the first closed position.

The electric wheel lock is thus a through-the-spokes or through-the-wheels wheel lock that is to be attached to the bike. The bike may for example correspond to a bicycle, electric bicycle, motorbike or motorcycle. To lock the bike, the bolt is inserted through a hole in the first arm and pushed into an opening in the second arm. The second arm houses the actual locking means, which locks the bolt by insertion of a latch element into a groove in the bolt. Preferably, the groove is a circular groove such that the orientation of the bolt is not important when inserting it. The rotating motor means provide the linear motion of the latch. As the rotation axis is perpendicular to the bolt, the rotation means is positioned within and along the second arm, i.e. in substantially the same direction of the second arm. The latch then sits between the rotation means and the bolt and is pushed sideways with respect to the plane defined by the rotation axis and the bolt upon opening the lock. Preferably, the bolt is straight such that it can be easily inserted in the first arm and guided towards the second arm into the locking means.

By providing a rotating motor means for opening the lock, the lock cannot be easily opened by moving a magnet alongside. Furthermore, motors are less prone to vibrations or shocks This renders the lock safer than a solenoid based lock.

Moreover, by the specific arrangement of the motor, the latch and the eccentrically rotating end, an optimal space saving arrangement is obtained as the motor resides on top of the bolt in the second arm. This way, the motor means takes no extra space around the bolt. By this arrangement, the obtained lock is applicable to a wide variety of bikes such as for example bicycles, scooters, mopeds or any other transportation means that comprises spoked wheels.

The eccentrically rotating end engages with the latch. If this end would be fitted exactly in the latch, the latch would not be able to move to its opening position upon insertion of the bolt when the motor means and thus the eccentrically rotating end is in its closing position. Therefore, a groove is provided in the latch such that the latch can move to its opening position when the bolt is inserted. The rotating end will then be guided with respect to this groove. When the bolt is fully inserted, the latch is then forced into the groove of the bolt by the pre-tensioning.

This arrangement has the advantage that the motor means do not have to rotate upon closing the lock. In other words, no electrical energy is needed at all when closing the lock and the lock can thus always be closed regardless of any other conditions. This is particularly important for an electric bike lock as it may be remotely managed and thus rely on wireless communication means.

According to an embodiment, the lock further comprises a controller for steering the motor means and the motor means further comprises a motor, a gearbox driven by this motor and a rotatable actuator driven by the gearbox. The actuator then comprises the eccentric rotating end portion. By this gearbox, a higher torque can be achieved and thus more force can be applied upon moving the latch.

Advantageously, the controller is then configured to turn the motor means into the first opened position upon instruction to open the lock and to subsequently turn the motor back into the first closed position after said bolt is removed from said lock.

This guarantees that the motor is always in its closed position and, thus, that the lock can be closed without further electrical energy at all times. As the motor closes to the locked position when the bolt is removed, no separate lock management is needed for closing the lock. This further reduces energy consumption as the lock only needs to be active when opening the lock and not when closing the lock.

According to an embodiment the rotatable actuator comprises a first and second stopping portion configured to obstruct the actuator from rotating beyond respectively the first opened position and the first closed position.

This way, no precise and expensive regulation of the motor is needed. The motor will always stop at its exact position by the physical obstruction provided by the stopping portions on the actuator.

Advantageously, the motor means then further comprises current measurement means for measuring a current to the motor and the controller is further configured to stop turning the motor when a measured current is above a predefined threshold.

This further reduces the energy consumption of the lock. When the actuator is obstructed by the stopping portion, the delivered torque of the motor will increase and, thus, the current delivered to the motor will also increase. This way it can be detected when the motor is at its open and closed position.

According to an embodiment, the locking means comprises a spring pre-tensioned upon insertion of the bolt into the locked position such that the spring pushes the bolt out of the second arm upon opening the lock.

This is particularly useful in combination with the automated locking of the motor as this way it is assured that the bolt is out of the lock when the motor turns back to its locked position.

According to a further embodiment, the second arm comprises a hole for inserting the bolt into and the locking means comprises a stopping element between the spring and the hole. The stopping element then closes the hole when the bolt is not inserted in the hole.

This prevents dust and moisture from entering the locking means.

Advantageously the stopping element is bevelled such that the latch is pushed sideways to the second opened position upon insertion into the locking means.

The bevelled stopping element thus transforms the linear insertion of the bolt into a perpendicular linear movement of the latch.

The stopping element may further comprise a pin portion opposite to the hole and the locking means may further comprise a switch. This pin is then pushed through the spring against the switch when the bolt is in the locked position. This allows detecting when the bike is actually locked with the inserted bolt.

According to an alternative embodiment, the end portion of the bolt is bevelled such that the latch is pushed sideways to the second opened position upon insertion into the locking means. This may be applied when no stopping element is used, the bolt itself is then bevelled to invoke the same lateral movement of the latch upon insertion.

### Brief Description of the Drawings

Fig. 1A illustrates a wheel lock according to an embodiment of the invention mounted on a bicycle frame when the lock is in a closed position; and
Fig. 1B illustrates a wheel lock according to an embodiment of the invention mounted on a bicycle frame when the lock is in an open position; and
Fig. 2A illustrates a cross section of a wheel lock according to an embodiment of the invention exposing the locking mechanism; and
Fig. 2B illustrates a front view of a wheel lock according to an embodiment of the invention; and
Fig. 3A illustrates a three-dimensional view of the locking means of a wheel lock according to an embodiment of the invention when the lock is in a closed position with the bolt inserted; and
Fig. 3B illustrates a planar view of a detail of the locking mechanism as shown in Fig. 3A.
Fig. 4A illustrates a three-dimensional view of the locking means of a wheel lock according to an embodiment of the invention when the lock is in an open position with the bolt partially pushed out of the locking means; and
Fig. 4B illustrates a planar view of a detail of the locking mechanism as shown in Fig. 4A; and
Fig. 4C illustrates the same view of Fig. 4A when the bolt is completely pushed out of the locking mechanism; and
Fig. 5A illustrates a three-dimensional view of the locking means of a wheel lock according to an embodiment of the invention when the locking means has returned to a closed position when the bolt is not inserted in the lock; and
Fig. 5B illustrates a planar view of a detail of the locking mechanism as shown in Fig. 5A.

### Detailed Description of Embodiments

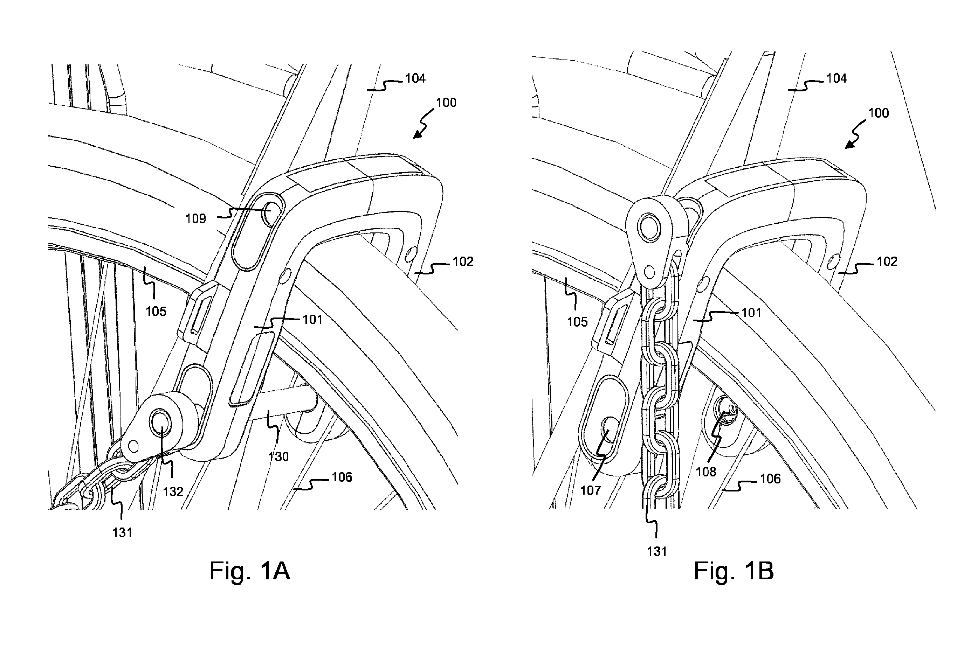

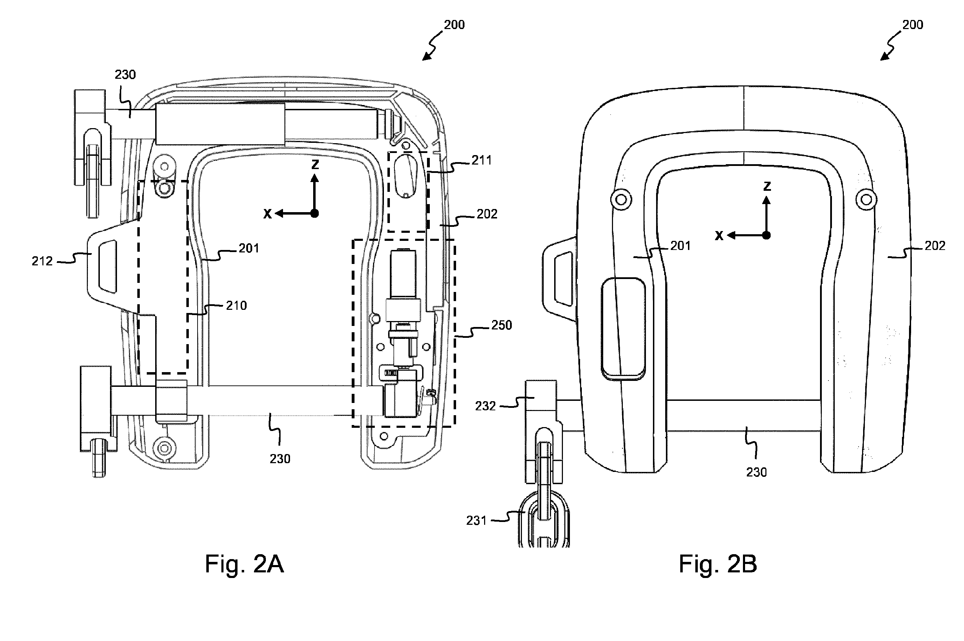

A wheel lock according to an embodiment of the invention is described in the detailed description below. This wheel lock and details of it are shown in Fig. 1 to Fig. 6. The reference numbers in the drawings comprise three digits wherein the first number refers to the number of the drawing and the number composed of the second and third digit refers to the part in the drawing. For example, reference 100 in Fig. 1A refers to the same component as reference 200 in Fig. 2A.

Fig. 1A and 1B illustrate an embodiment of the wheel lock 100 when mounted on a bicycle frame 104. The wheel lock comprises two substantially parallel arms 101 and 102 which extend over the wheel and rim 105 of the bicycle. In the remainder of this description arm 101 is referred to as the first arm 101 and arm 102 is referred to as arm 102. The first arm 101 comprises a hole 107 protruding completely through the first arm. The second arm 102 comprises an opening 108 substantially at the same position as the hole 107. The second arm 102 comprises the actual locking mechanism. The lock 100 also comprises a bolt 130 which is used to lock the bicycle and thus the bike. In order to do so, the bolt 130 is inserted in the hole 107 and pushed into the opening 108 and thus into the locking mechanism upon which the bicycle is locked. Fig. 1A illustrates when the wheel lock 100 is locked. The bolt 130 is preferably straight over the length from the first arm 101 to the second arm 102. In the closed position, the bolt 130 prevents the wheel to turn by obstructing the spokes 106.

The wheel lock 100 may further comprise a chain 131 which is attached to the bolt 130. The attachment may be done by the rotatable means 132 such that the chain 131 can be rotated freely around the point where it is attached to the bolt 130. Upon closing the bike, the chain may be wrapped around a fixed object in order to securely fasten the bicycle to this object. This system has the advantage that the bicycle can be locked in two ways with one lock. Instead of the chain 131, other fixation means may be used such as for example a cable.

The lock 100 may also comprise a second hole 109 in the top section of the lock 100 on top of the two arms 101, 102. When the lock is not locked as shown in Fig. 1B, this hole 109 may be used to house the bolt 130, for example while riding the bicycle.

Fig. 2B illustrates a front view of the lock 200 whereby the first arm 201 is on the left and the second arm 202 is on the right. Fig. 2B illustrates the lock 200 in a locked state with the bolt 230 in its locked position.

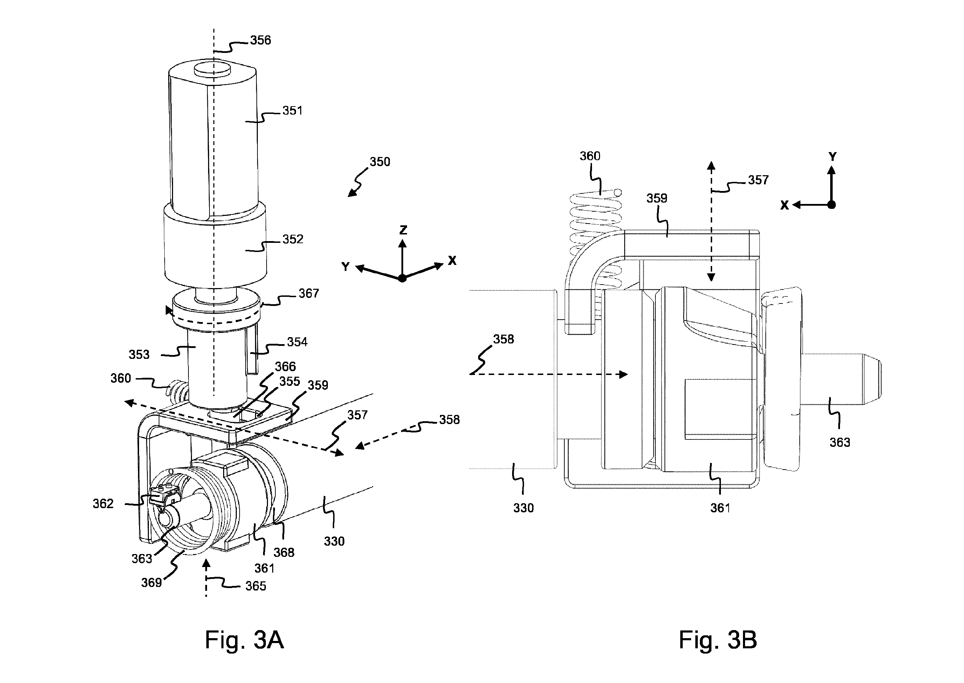

Fig. 2A illustrates a cross-section of the lock 200 such that the internals of the lock are visible. All components are attached to an internal metal frame 212. The first arm 201 houses a battery compartment 210 for supplying energy to a controller place in location 211 (not shown in the drawing) and the locking mechanism 250. The controller 211 steers the electrical components in the locking mechanism 250. The locking mechanism 250 is preferable contained in a separate housing to further protect it from opening. This housing may for example be made of forged steel. The locking mechanism 250 and the opening of the lock is described in more detail below with reference to Fig. 3 to Fig. 6.

Fig. 3A and Fig. 3B illustrate the locking mechanism 350 when the bolt 330 is in a closed position, i.e., when the lock is closed as also illustrated in Fig. 1A. Fig. 3B shows a bottom view of the locking mechanism where the viewing direction of Fig. 3B is indicated by arrow 365 in Fig. 3A. The locking mechanism 350 comprises motor means that provide a rotation around the rotation axis 356. Thereto, the motor means comprises a motor 351, a gearbox 352 and an actuator 353. When the motor 351 turns, the actuator 353 turns along the same rotation axis 356 of the motor but at a lower speed because of the reduction in the gearbox. By the gearbox, the actuator 353 can deliver a higher torque than the motor 351 at the expense of rotational speed. The motor may for example be a DC motor.

The motor means 351, 352, 353 is positioned such that its rotation axis 356 is substantially perpendicular to the direction 358 at which the bolt 330 was inserted into the locking mechanism 350. Because of this, the motor means is fitted within and along the second arm 202, i.e., substantially in the same direction of the second arm resulting in a narrow size of the second arm 202.

In the situation depicted in Fig. 3A, the motor and thus the actuator 353 is in its closed position. To get into this state, the actuator 353 was moved along the direction 367. The actuator 353 further comprises a stopping portion 354. When rotating the actuator 354 along direction 367, the stopping portion 354 engages with the housing of the locking mechanism and physically obstructs the actuator 353 to rotate any further along the direction 367, i.e., it cannot rotate beyond its closed position.

At the end of the actuator 353 is an eccentric cylindrical end portion 366. The symmetry axis of this end portion 366 is shifted with respect to the rotation axis 356 of the motor means. By rotation of the actuator 353 by the motor 351, this end portion will thus perform a linear movement along direction 357, i.e., in a direction substantially perpendicular to the insertion direction 358 of the bolt and substantially perpendicular to the rotational axis 356 of the motor means.

The locking mechanism 350 further comprises a latch 359 which may engage with the end portion 366 and the bolt 330. In Fig. 3A, the latch 359 is in a locking position as it is inserted in a groove 368 of the bolt 330. The groove 368 is a circular groove at the end portion of the bolt 330. As the latch sits in the groove, the bolt 330 is prevented from moving out of the locking mechanism, i.e., it is prevented to move along direction 358.

The end portion 366 of actuator 353 sits in the latch 359 in a groove 355. Groove 355 extends along the direction 357. In other words, groove 355 is applied such that the latch may move along direction 357 along the groove 368. However, latch 359 is prevented from doing so as it is pre-tensioned in its locked position by the spring 360. Spring 360 thus pushes the latch along direction 357 into the groove 368 of the bolt 330, thereby keeping the lock closed.

The locking mechanism 350 further comprises spring 369, stopping element 361 and switch 362. When the bolt 330 is inserted, the spring 369 is pre-tensioned to push the bolt 330 out of the locked position, i.e., opposite direction 358, which is prevented by latch 359. The stopping element 361 sits in between the spring 369 and the inserted bolt 330. The stopping element 361 also comprises a pin 363 which activates the switch 362 when the bolt 330 is inserted. The controller 211 uses this switch to detect when the bolt 330 is inserted and, thus, when the lock is locked.

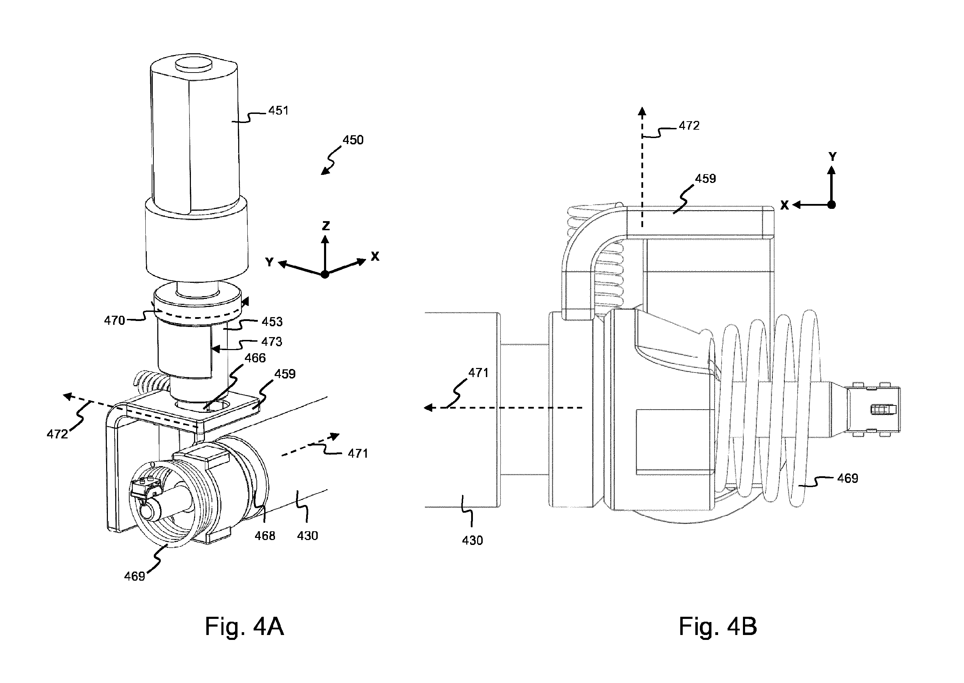

Fig. 4A and Fig. 4B illustrate the same locking mechanism 450 but in the state when the lock has just been opened. In order to do so, the controller 211 instructs the motor 451 to turn towards its opening position. The rotation of the motor moves the actuator 453 in direction 470, i.e., such that the eccentric end portion 466 moves linearly along direction 472 away from bolt 430. The eccentric end portion 466 thereby engages with the latch 459. The latch 459 then moves together with the eccentric end portion thereby moving the latch 459 out of the groove 468 of the bolt 430. The bolt 430 is now free to move along direction 471 out of its insertion direction. As the bolt 430 was pre-tensioned by spring 469, it is pushed out of its locked position as depicted in Fig. 4B.

In order to accurately control the stopping position of the actuator, the actuator comprises a second stopping portion 473. When the stopping position is reached, the stopping portion 473 engages with the housing of the locking mechanism thereby obstructing the actuator 453 from turning any further.

Preferable, the motor 451 is stopped from turning and delivering torque as soon as the stopping positions are reached, either by stopping portion 473 or 354. This may for example be done be measuring the current supplied to the motor 451 in the controller 211. When the measured currents exceeds a predetermined threshold, the motor 451 is stopped. As the measured current is proportional to the torque delivered to the motor 451, the exceeding of the threshold is an indication that the end portions 354 or 473 are obstructing the rotation of the actuator. Advantageously, the motor is further steered by a pulse width modulated signal. The signal is then modulated in such a way that the initial current peak occurring when starting the motor is avoided. This way it is avoided that this start-up current peak exceeds the predetermined threshold and the motor is turned off before reaching the targeted stopping position.

Alternatively, instead of measuring the motor current, the position of the motor 451 and thus actuator 453 may also be determined by a magnetic encoder, i.e., by a position sensor that allows the controller to retrieve the position of the actuator. The motor is then turned off when the position sensor indicates that the actuator is at the targeted stopping position.

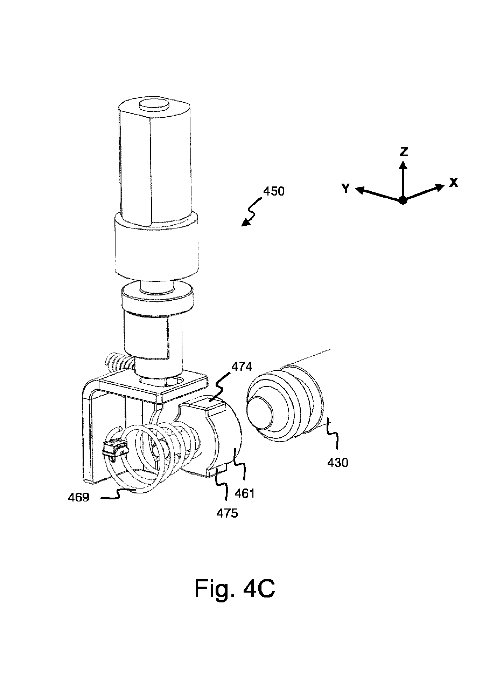

Fig. 4C illustrates the state where the bolt 430 is completely removed from the locking mechanism 450. In this situation, stopping element 461 is pushed by spring 469 into the opening 108 for inserting the bolt 430. The radially extending portions 474 and 475 prevent that the stopping element is pushed completely through opening 108. Therefore, when the lock is open, the stopping element closes the opening 108 and thereby prevents that moist and dust can enter the locking mechanism.

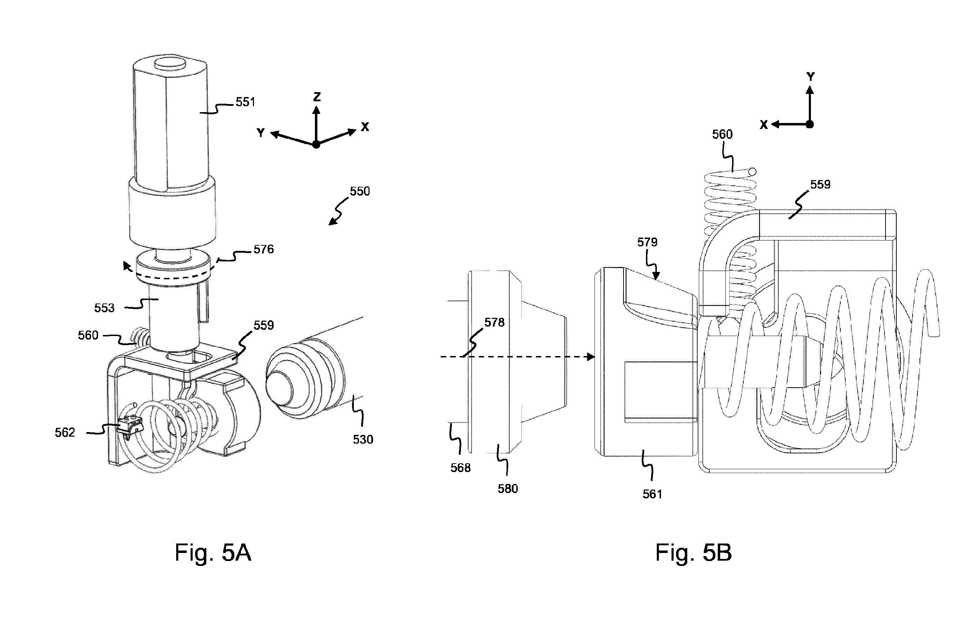

As illustrated by Fig. 5A and Fig. 5B, when the lock is opened, the controller 211 instructs the motor to return to its locking position. This is done after a pre-determined time interval, for example 1 second after the switch 562 has detected that the bolt 530 was removed. When the motor returns to its locking position, also the actuator 553 turns back to its locking position along direction 576. Consequently, the latch 559 returns to its closing or locked position by the action of spring 560. The lock then remains in this state until it is closed again.

When the lock is closed, no further rotation of the motor 551 and actuator 553 is needed. When the bolt 530 is inserted along direction 578, it will first engage with stopping element 561. Stopping element is then pushed against the latch 559. The portion 579 of the stopping element contacting the latch 559 is bevelled such that the latch 559 is pushed to its opening position by the insertion of the bolt 530. Upon further insertion, the latch then slides over the stopping element 561 and end portion 580 of the bolt until it latches into the groove 568. As the circular groove 568 is not bevelled but comprises upright walls the latch cannot be moved by pulling the bolt 530 out of the lock, hence the lock is closed as also depicted in Fig. 3A and Fig. 3B.

According to an alternative embodiment, the stopping element 361 may be left out of the locking mechanism 350. In order to create then the latching mechanism upon closing the lock, the end portion of the bolt 330 is then bevelled such that the latch is again pushed away upon insertion of the bolt 330 in the locking mechanism.

The command for opening the electric lock according to the above embodiments may further originate from within the lock itself, i.e., the command to open the lock is initiated by a direct interaction between the user and the lock. To this purpose, the lock may comprise a keyboard by which a user can enter a code. For example, the lock may comprise a plurality of buttons. The user then enters an opening code by pushing the buttons in a certain sequence. This opening code is then received by the controller in the lock and compared with a predefined sequence. If the sequences match, the controller instructs the locking mechanism to turn the motor and thus the actuator to the opening position.

Alternatively or complementary to the above way of opening the lock, the lock may also comprise wireless communication means by which it can wirelessly communicated with an electronic device. Preferably, this communication is secured by encrypting the data communication. In this way, the lock may receive the opening code as binary data from the electronic device. Then again, the controller verifies whether the code is correct and, if so, opens the lock. For the wireless communication means, a low energy wireless protocol may be used such as for example, Bluetooth, Bluetooth Low Energy or Near Field Communication.

In order to further reduce the energy consumption of the lock, the lock may comprise a button to activate it for a predetermined duration. A user will then only be able to communicate with the lock either by buttons or by wireless communication after pressing this button.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Electric wheel lock (100) for a bike comprising:
- a body attachable to a bike frame (104); said body comprising a first (101) and second (102) arm extending over both sides of a wheel rim (105) when installed on said bike frame; said second arm (102) comprising locking means (350);
- a bolt (130, 330) insertable through said first arm (101) into said locking means (350) in a locked position; said bolt comprising a groove (368);
and wherein said locking means (350) comprises:
- motor means (351, 352, 353) rotatable along a rotation axis (356) between a first opened position and a first closed position; and wherein said rotation axis is perpendicular to said bolt when in said locked position; and wherein said rotation means comprises an eccentric rotating end portion (366) providing a linear movement (357) perpendicular to said rotation axis;
- a latch (359) moveable by said linear movement (357) between a second closed position and a second opened position and pre-tensioned in said second closed position; and wherein in said closed position said latch is inserted in said groove (368) when in said locked position; and wherein said latch comprises a groove (355) such that it is movable to said second opened position upon insertion of said bolt and movable back into said second closed position while said motor means is in said first closed position.

2. Lock according to claim 1 further comprising a controller (211) for steering said motor means and said motor means further comprising:
- a motor (351);
- a gearbox driven by said motor (352);
- a rotatable actuator (353) driven by said gearbox; said actuator comprising said eccentric rotating end portion (366).

3. Lock according to claim 2 wherein said controller is configured to:
- turn said motor means into said first opened position upon instruction to open said lock;
- subsequently turn said motor back into said first closed position after said bolt is removed from said lock.

4. Lock according to claim 2 or 3 wherein said rotatable actuator (353) comprises a first (354) and second (473) stopping portion configured to obstruct said actuator from rotating beyond respectively said first opened position and said first closed position.

5. Lock according to claim 4 wherein said motor means (350) further comprises current measurement means for measuring a current to said motor (351); and wherein said controller is further configured to:
- stop turning said motor when a measured current is above a predefined threshold.

6. Lock according to any one of the preceding claims wherein said locking means comprises a spring (369) pre-tensioned upon insertion of said bolt (330) into said locked position such that said spring pushes said bolt out of said second arm upon opening said lock.

7. Lock according to claim 6 wherein second arm comprises a hole (108) for inserting said bolt (130) into; and wherein said locking means (350) comprises a stopping element (361) between said spring (369) and said hole (108); and wherein said stopping element closes said hole when said bolt is not inserted in said hole.

8. Lock according to claim 7 wherein said stopping element is bevelled (579) such that said latch (559) is pushed sideways to said second opened position upon insertion into said locking means (550).

9. Lock according to claim 7 or 8 wherein said stopping element (361) comprises a pin portion (363) opposite to said hole (108); and wherein said locking means comprises a switch (362); and wherein said pin is pushed through said spring against said switch when said bolt is in said locked position.

10. Lock according to any one of claims 1 to 6 wherein an end portion (580) of said bolt (530) is bevelled such that said latch (559) is pushed sideways to said second opened position upon insertion into said locking means.
